# EUROPEAN PATENT APPLICATION

(11) **EP 3 674 136 A1**
(43) Date of publication of application: **01.07.2020**
(21) Application number: 19219809.1
(22) Date of filing: 27.12.2019
(51) Int. Cl.: B60N 2/888

(54) **HEAD RESTRAINT WITH ACTIVE DEPLOYMENT**

(30) Priority: 28.12.2018 US 201862786060 P
(71) Applicant: Windsor Machine and Stamping (2009) Ltd., Windsor, Ontario N9C 2LB (CA)
(72) Inventor: Collins, Angelo, Windsor, Ontario N9C 2L8 (CA)
(74) Representative: Manitz Finsterwald Patent- und Rechtsanwaltspartnerschaft mbB

(57) **Abstract**

A head restraint assembly includes a front shell and a rear shell (21) defining an interior space. The head restraint assembly also includes a linkage mechanism (64) operatively coupled to the front shell, the linkage mechanism disposed within the interior space, the linkage mechanism spring biased toward a first position. The head restraint assembly further includes an actuator (40) in operative communication with a collision detection system (50), the linkage mechanism moveable to a second, deployed position upon actuation by the actuator to lock the front shell in the second, deployed position.

## Description

### CROSS-REFERENCE TO RELATED APPLICATION

This patent application claims priority to U.S. Provisional Patent Application Serial No. 62/786,060, filed December 28, 2018, which is incorporated hereby by reference in its entirety.

### FIELD OF THE INVENTION

The subject matter disclosed herein relates to vehicle head restraints and, more particularly, to a vehicle head restraint that is actively deployable.

### BACKGROUND OF THE DISCLOSURE

Many vehicles, such as automobiles, include a head restraint (also may be referred to as a headrest) atop an occupant's seat and in a position adjacent the occupant's head. Head restraints are typically cushioned for comfort, are height adjustable, and most are commonly finished in the same material as the rest of the seat. Design and assembly of head restraints require consideration of assembly structural integrity. Several challenges are involved with ensuring the desired structural integrity.

Movement of head restraints to reposition them to a desired location typically requires manual manipulation of the head restraints. A less cumbersome adjustment capability is desirable. Additionally, the adjusted position of the head restraint may impact the safety effectiveness of the head restraint during an excessive vehicle acceleration or deceleration event.

### SUMMARY OF THE DISCLOSURE

According to one aspect of the disclosure, a head restraint assembly includes a front shell and a rear shell defining an interior space. The head restraint assembly also includes a linkage mechanism operatively coupled to the front shell, the linkage mechanism disposed within the interior space, the linkage mechanism spring biased toward a first position. The head restraint assembly further includes an actuator in operative communication with a collision detection system, the linkage mechanism moveable to a second, deployed position upon actuation by the actuator to lock the front shell in the second, deployed position.

According to another aspect of the disclosure, an automatically deployable head restraint assembly includes a front shell and a rear shell defining an interior space, the front shell manually adjustable by a user. The head restraint assembly also includes a linkage mechanism operatively coupled to the front shell and disposed within the interior space. The linkage mechanism includes a first pair of lock arms extending from a first end to a second end, the first end operatively coupled to an armature, the second end operatively coupled to the front shell, each of the first pair of lock arms defining a respective slot, the first pair of lock arms spring biased toward the first position. The lock mechanism also includes a first lock bar extending through the respective slots of the first pair of lock arms, wherein the first lock bar is slideable within the respective slots during movement between the first positon and the second, deployed position. The lock mechanism further includes a second pair of lock arms extending from a first end to a second end, the first end operatively coupled to the armature, the second end operatively coupled to the front shell, each of the second pair of lock arms defining a respective slot, the second pair of lock arms spring biased toward the first position. The lock mechanism yet further includes a second lock bar extending through the respective slots of the second pair of lock arms, wherein the second lock bar is slideable within the respective slots of the second pair of lock arms during movement between the first positon and the second, deployed position. The lock mechanism also includes a pair of lock bar anchors, the lock bar anchors coupled to the first lock bar and the second lock bar to operatively couple the first pair of lock arms and the second pair of lock arms. The head restraint assembly also includes a lock slide operatively coupled to the linkage mechanism. The head restraint assembly further includes an actuator positioned to contact the lock slide, the linkage mechanism moveable to a second, deployed position upon actuation by the actuator to lock the front shell in the second, deployed position.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a side, elevational view of a head restraint;
FIG. 2 is a front perspective view of the head restraint;
FIG 3. is a rear perspective view of the head restraint;
FIG. 4 is a side, elevational view of the head restraint in a first position;
FIG. 5 is a rear perspective view of the head restraint in the first position;
FIG. 6 is a rear, elevational view of the head restraint in the first position;
FIG. 7 is a side, elevational view of the head restraint in a second position;
FIG. 8 is a side, elevational view of the head restraint in the second position according to another aspect of the disclosure;
FIG. 9 is a first side perspective view of the head restraint in the second position according to another aspect of the disclosure;
FIG. 10 is a second side perspective view of the head restraint in the second position according to another aspect of the disclosure;
FIG. 11 is a side, elevational view of the head restraint in the second position according to another aspect of the disclosure;
FIG. 12 is a perspective view of the head restraint in the second position according to another aspect of the disclosure;
FIG. 13 illustrates the head restraint in the first position according to another aspect of the disclosure; and
FIG. 14 illustrates the head restraint in the second position according to the embodiment of FIG. 13.

The detailed description explains embodiments of the invention, together with advantages and features, by way of example with reference to the drawings.

### DETAILED DESCRIPTION

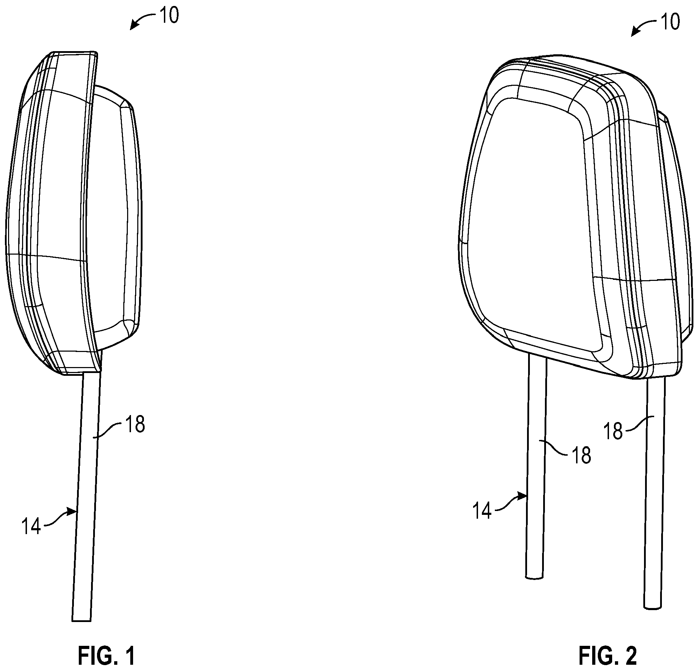

Referring to FIGS. 1-3, a head restraint assembly 10 is illustrated. The head restraint assembly 10 includes a base portion 14 that is mountable to a vehicle seat (not shown) and, more specifically, to the upper portion of the seatback of the vehicle seat. In the illustrated embodiment, the base portion 14 includes two post members 18 that are mounted, or mountable, to the top of the seatback of the vehicle seat, as understood by those skilled in the art. The base portion 14 may also be referred to herein as an armature. Each of the post members 18 extends into a respective hole formed in the top of the seatback to attach the head restraint assembly 10 to the vehicle seat.

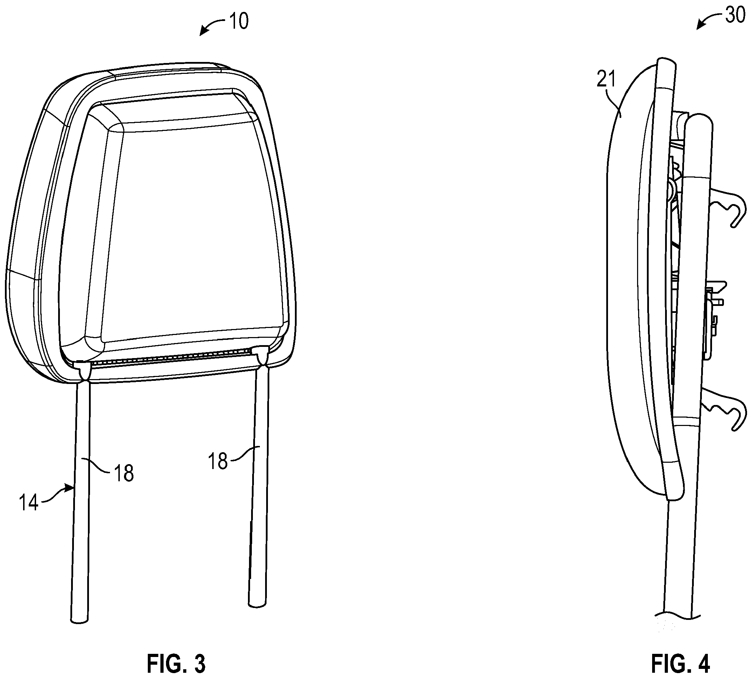

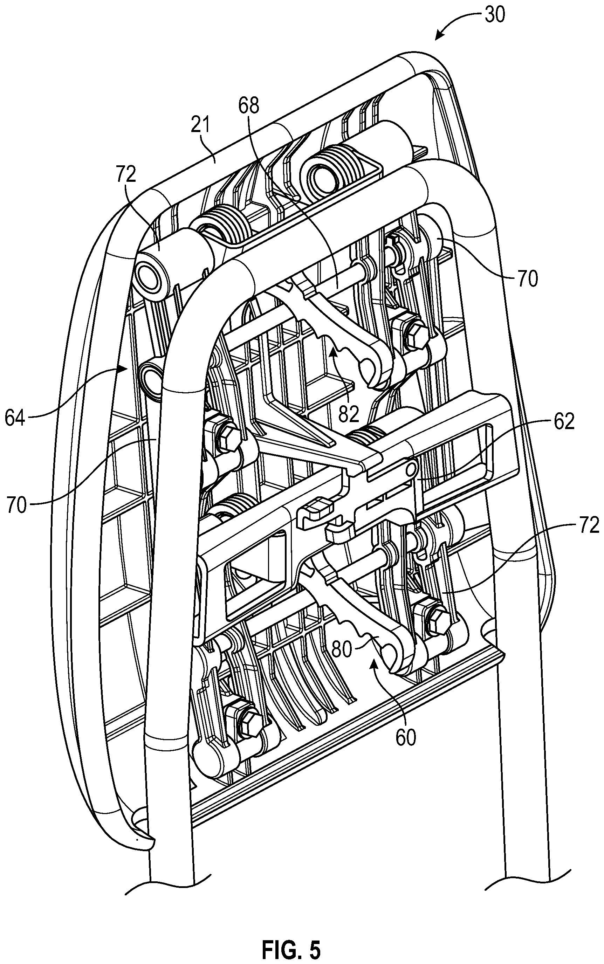

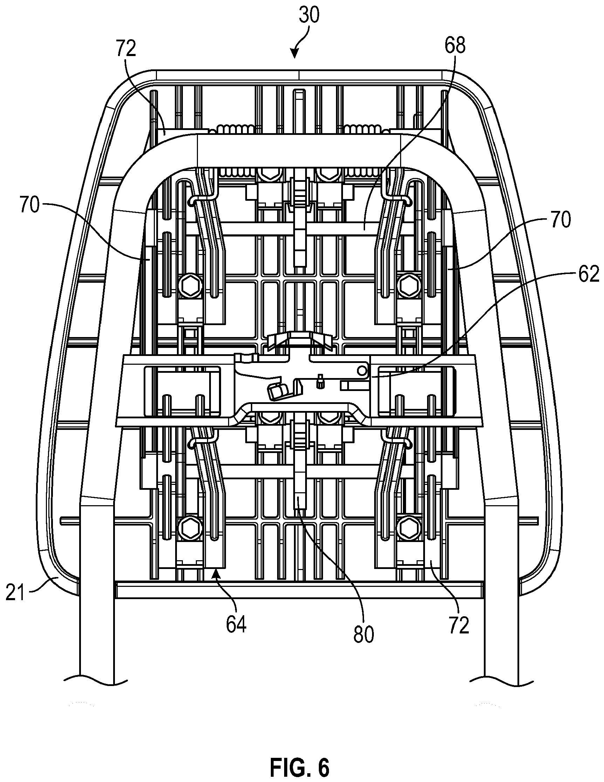

FIGS. 4-6 illustrate a frame assembly (or housing) 30 that provides rigid structure to the head restraint assembly 10 and partially encloses a number of components, as will be described in detail below. The head restraint assembly 10 also typically includes a cushion and a head restraint cover that are mounted with respect to the frame assembly for movement therewith. The head restraint cushion is comprised of a soft foam material or a like material to provide a cushion between the head of a human occupant of the vehicle seat and the frame assembly 30. The head restraint cover covers at least part of the cushion and the housing to enhance the aesthetics of the head restraint. Exemplary cover materials include cloth, vinyl, leather, etc.

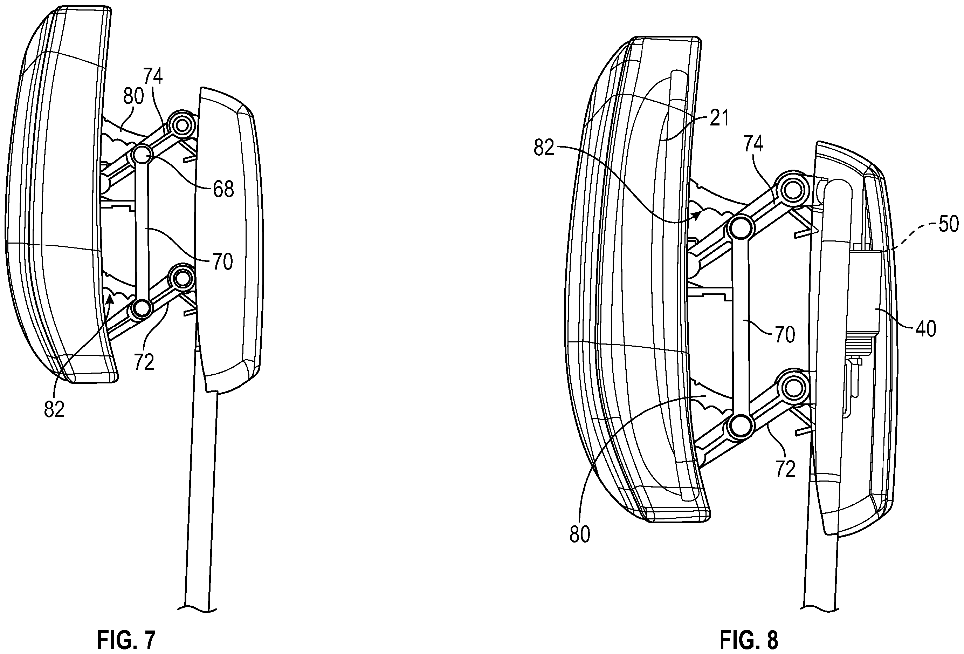

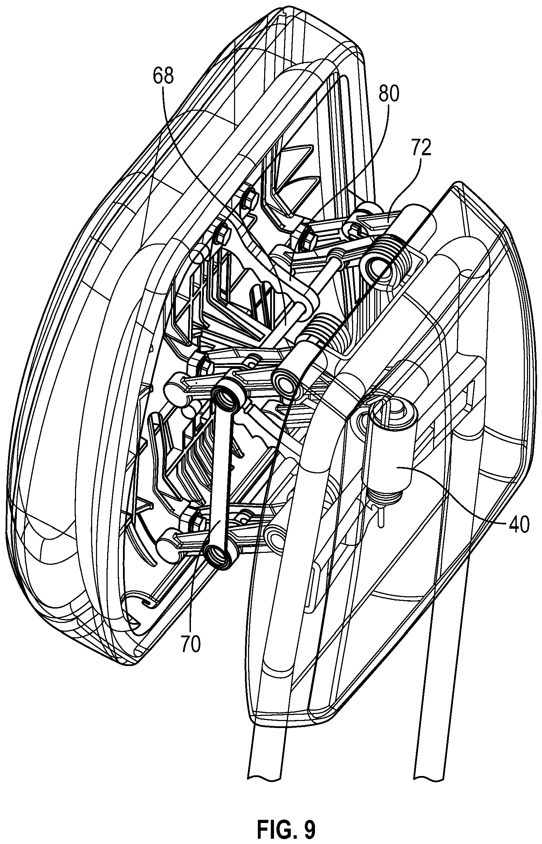

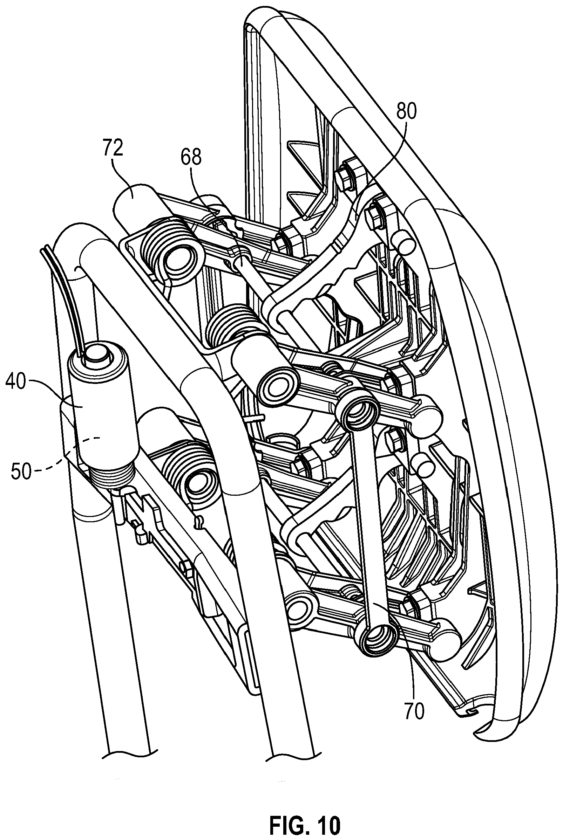

FIGS. 4-6 show a front frame plate 21, with the rear frame plate removed to clearly illustrate the internal components. The head restraint assembly 10 is configured for adjustment in at least one direction, which is done manually in some embodiments and in an automated, powered manner in other embodiments. The illustrated internal features are associated with active and automated positional adjustment of the head restraint assembly 10. An actuator, such as a solenoid 40 (FIGS. 8-10) is in operative communication with a rear impact detection system 50, either directly or indirectly via a system controller. The rear impact detection system 50 is configured to detect imminent rear collisions via sensors, RADAR, imaging devices, or any other detection devices.

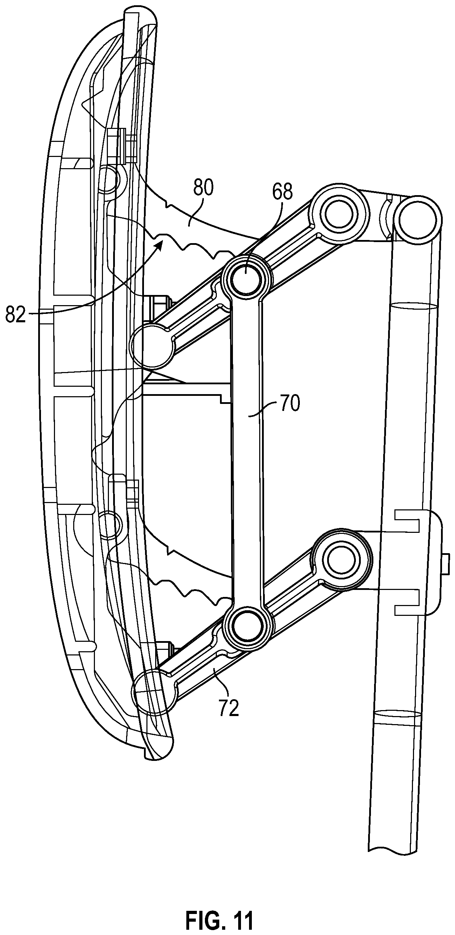

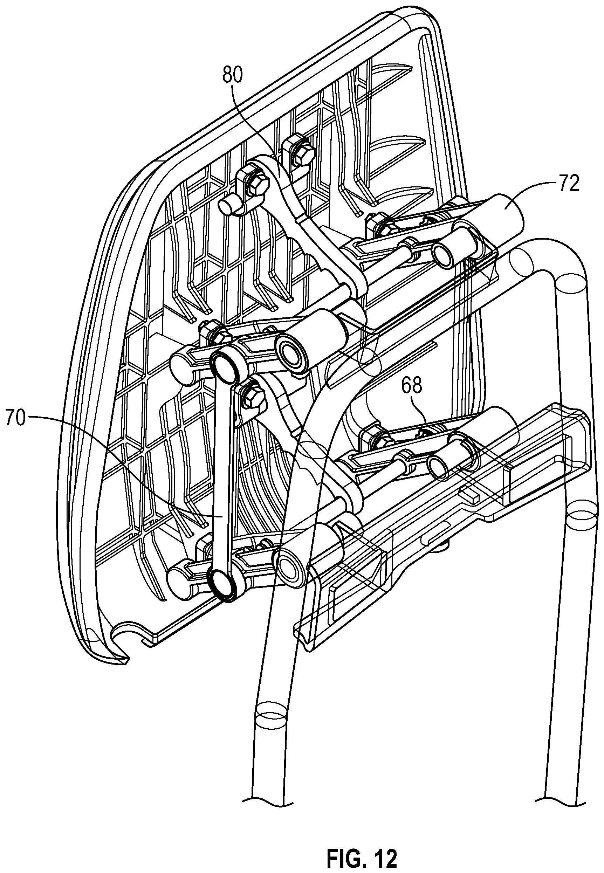

Upon detection of a probable rear vehicle collision by the rear impact detection system 50, the solenoid 40 is actuated to automatically deploy the head restraint assembly 10 from a first position 52 (FIGS. 4-6) to a second, deployed position 54 (FIGS. 7-12). This automated deployment to the second, deployed positon 54 is performed at a rapid speed that is faster than the adjustment movement that is performed during normal powered adjustment by a user or during adjustment to a programmed driver preferred position. This rapid deployment moves the head restraint assembly 10 to the second, deployed position 54 over a time period that allows the head restraint assembly 10 to be positioned in the second, deployed position 54 prior to - or concurrently with - the impact event, or as close to the second, deployed positon 54 as possible. In some embodiments, the second, deployed position 54 is a fully upward position and a fully forward position, relative to the available adjustment range of the head restraint assembly 10. Specifically, the head restraint assembly 10 undergoes a "shooting" movement to the extreme upward and forward positions. As one can appreciate, the precise position that is deemed most desirable for the second, deployed position 54 may vary depending upon the particular application.

As shown in FIGS. 4-12, the above-described automated deployment is facilitated with a deployment assembly 60. The deployment assembly 60 includes the solenoid 40 that is in operative contact with a lock slide 62 that is operatively connected to a linkage mechanism 64. Alternatively, the solenoid 40 may be configured to contact the linkage mechanism itself directly. The linkage mechanism 64 includes at least one lockbar 68 extending in a substantially cross-car direction (e.g., parallel to substantially horizontal portion of armature). The lock bar 68 is fixed proximate its ends to a pair of lock bar anchors 70. In the illustrated embodiment, there are two lock bars present, with each having its ends fixed to the lock bar anchors 70. In such an embodiment, the lock bar anchors 70 are arms operatively coupling the lock bars to each other to ensure corresponding movement of the two lock bars. The lock bar(s) 68 extends through a pair of biasing arms 72. The biasing arms 72 are each fixed (directly or indirectly) at one end to the armature and at the other end to the front plate 21. The biasing arms 72 each define a slot 74 that the lock bar(s) 68 extend through and may slide throughout. The biasing arms 72 are spring biased to position the linkage mechanism 64 - and therefore the head restraint assembly 10 - in the first position that is shown in FIGS. 4-6.

The lock slide 62 is illustrated as being oriented in a cross-car direction in the illustrated embodiments, but it is to be appreciated that the lock slide 62 may be in other orientations, such as fore-aft (i.e., longitudinal direction of vehicle) or vertical. Regardless of the orientation of the lock slide 62, actuation of the solenoid 40 causes movement of the lock slide 62. The movement of the lock slide 62 actuates movement of the linkage mechanism 64 that overcomes the spring biasing force to rapidly move the linkage mechanism 64 - and therefore the head restraint assembly 10 - toward the second, deployed position shown in FIGS. 7-12. During this movement away from the first position, the biasing arms 72 pivot about their ends coupled to the armature, or rear plate, with the lock bar(s) 68 sliding relative to the biasing arms 72 within slots 74.

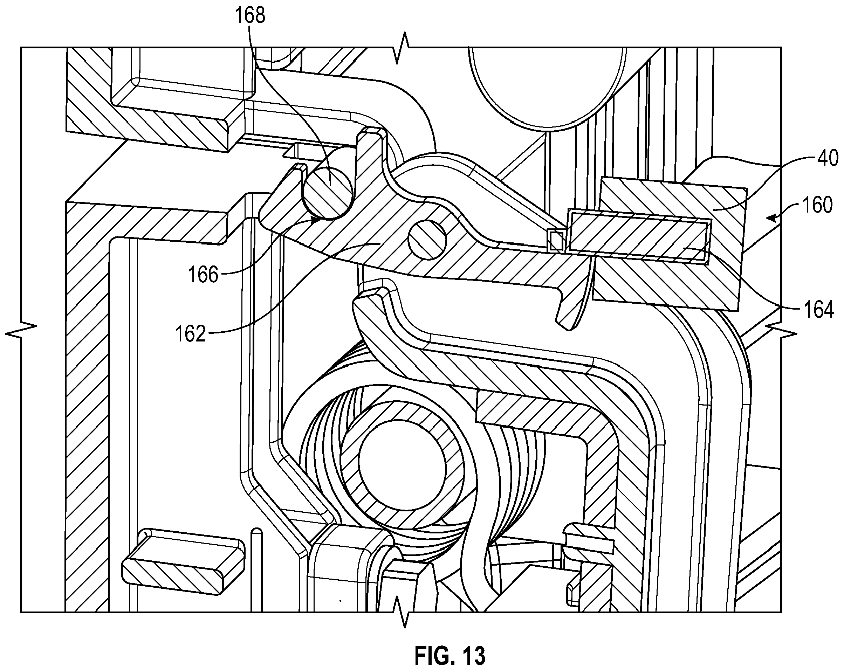

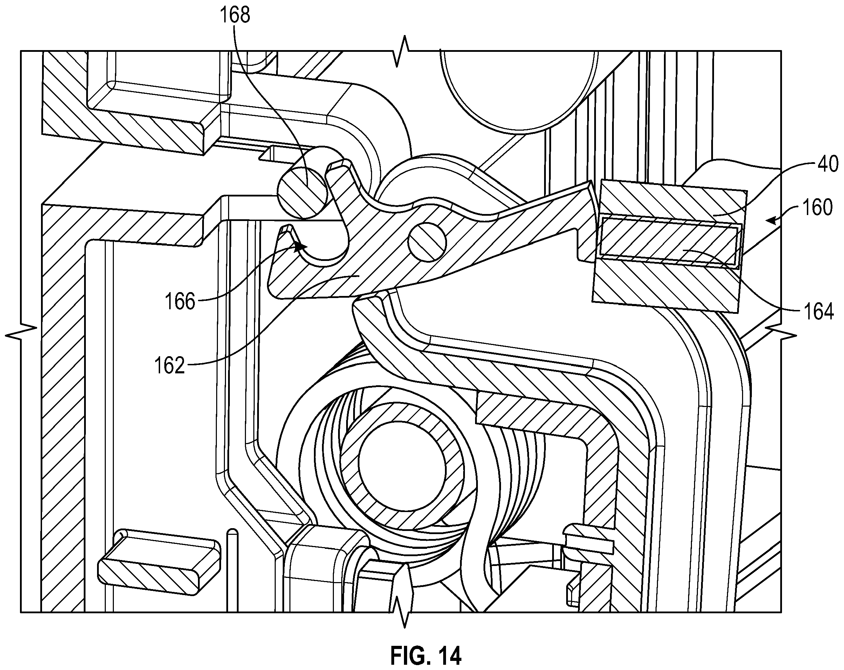

FIGS. 13 and 14 illustrate another embodiment of the deployment assembly which is referenced with numeral 160. In the illustrated deployment assembly 160, the solenoid 40 is oriented in a fore-aft direction and the lock slide 162 is pivotable about a cross-car axis. The solenoid 40 includes a plunger 164 that is moveable between an extended position (FIG. 13) and a retracted position (FIG. 14). In the extended position, the plunger 164 is in contact with the lock slide 162 and resists rotation of the lock slide 162. The lock slide 162 includes a recessed portion 166 that retains a pin 168. The pin 168 is operatively coupled to the linkage mechanism 64. The pin 168, and therefore, the linkage mechanism 64 remain in the first position when the plunger 164 of the solenoid 40 is extended (FIG. 13). However, when the plunger 164 is retracted, the lock slide 162 is able to pivot to allow disengagement of the pin 168 to initiate the movement of the head restraint assembly from the first position to the second position (FIG. 14).

Regardless of the type of deployment assembly 60, 160 employed, a lever 80 is rigidly coupled to the front plate 21 and includes a plurality of recesses 82. The recesses 82 are defined by a wall profile that includes angled portions that allow the lever 80 to move forward (and possibly upward) without impedance by the lock bar(s) 68. In other words, relative movement between the lever 80 and the lock bar 68 is permitted during movement from the first position to the second position, even though contact between the elements is present. However, the wall profile that defines the recesses 82 of the lever 80 does not permit relative sliding between the lock bar 68 and the lever 80 in the opposite direction, thereby locking the linkage mechanism 64 - and therefore the head restraint assembly 10 - in the deployed position to provide a secure restraint for a user's head during a collision event.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A head restraint assembly comprising:
a front shell and a rear shell defining an interior space;
a linkage mechanism operatively coupled to the front shell, the linkage mechanism disposed within the interior space, the linkage mechanism spring biased toward a first position; and
an actuator in operative communication with a collision detection system, the linkage mechanism moveable to a second, deployed position upon actuation by the actuator to lock the front shell in the second, deployed position.

2. The head restraint assembly of claim 1, wherein the front shell is adjustable over a range of movement including a fore-aft direction and a vertical direction, the fore-aft direction defined by a fully forward position and a fully rearward position, the vertical direction defined by a fully up position and a fully down position.

3. The head restraint assembly of claim 1, wherein the linkage mechanism comprises:
a first pair of lock arms extending from a first end to a second end, the first end operatively coupled to an armature, the second end operatively coupled to the front shell, each of the first pair of lock arms defining a respective slot, the first pair of lock arms spring biased toward the first position; and
a first lock bar extending through the respective slots of the first pair of lock arms, wherein the first lock bar is slideable within the respective slots during movement between the first positon and the second, deployed position.

4. The head restraint assembly of claim 3, the linkage mechanism further comprising:
a second pair of lock arms extending from a first end to a second end, the first end operatively coupled to the armature, the second end operatively coupled to the front shell, each of the second pair of lock arms defining a respective slot, the second pair of lock arms spring biased toward the first position;
a second lock bar extending through the respective slots of the second pair of lock arms, wherein the second lock bar is slideable within the respective slots of the second pair of lock arms during movement between the first positon and the second, deployed position; and
a pair of lock bar anchors, the lock bar anchors coupled to the first lock bar and the second lock bar to operatively couple the first pair of lock arms and the second pair of lock arms.

5. The head restraint assembly of claim 4, wherein the pair of lock bar anchors are coupled to the first lock bar and the second lock bar at ends of the first lock bar and the second lock bar.

6. The head restraint assembly of claim 3, further comprising a first lever rigidly coupled to the front shell, the first lever comprising a wall having a plurality of recesses, each of the plurality of recesses positioned to be in contact with the first lock bar during movement between the first position and the second, deployed position, each of the recesses having an angled wall portion allowing the lever to move forward toward the second, deployed position and preventing rearward movement of the lever relative to the first lock bar.

7. The head restraint assembly of claim 4, further comprising a second lever rigidly coupled to the front shell, the second lever comprising a wall having a plurality of recesses, each of the plurality of recesses positioned to be in contact with the second lock bar during movement between the first position and the second, deployed position, each of the recesses having an angled wall portion allowing the lever to move forward toward the second, deployed position and preventing rearward movement of the lever relative to the second lock bar.

8. An automatically deployable head restraint assembly comprising:
a front shell and a rear shell defining an interior space, the front shell manually adjustable by a user;
a linkage mechanism operatively coupled to the front shell and disposed within the interior space, the linkage mechanism comprising:
a first pair of lock arms extending from a first end to a second end, the first end operatively coupled to an armature, the second end operatively coupled to the front shell, each of the first pair of lock arms defining a respective slot, the first pair of lock arms spring biased toward the first position;
a first lock bar extending through the respective slots of the first pair of lock arms, wherein the first lock bar is slideable within the respective slots during movement between the first positon and the second, deployed position;
a second pair of lock arms extending from a first end to a second end, the first end operatively coupled to the armature, the second end operatively coupled to the front shell, each of the second pair of lock arms defining a respective slot, the second pair of lock arms spring biased toward the first position;
a second lock bar extending through the respective slots of the second pair of lock arms, wherein the second lock bar is slideable within the respective slots of the second pair of lock arms during movement between the first positon and the second, deployed position; and
a pair of lock bar anchors, the lock bar anchors coupled to the first lock bar and the second lock bar to operatively couple the first pair of lock arms and the second pair of lock arms;
a lock slide operatively coupled to the linkage mechanism; and
an actuator positioned to contact the lock slide, the linkage mechanism moveable to a second, deployed position upon actuation by the actuator to lock the front shell in the second, deployed position.

9. The head restraint assembly of claim 8, wherein the actuator is in operative communication with a collision detection system.

10. The head restraint assembly of claim 8, wherein the front shell is adjustable over a range of movement including a fore-aft direction and a vertical direction, the fore-aft direction defined by a fully forward position and a fully rearward position, the vertical direction defined by a fully up position and a fully down position.

11. The head restraint assembly of claim 2 or claim 10, wherein the second, deployed position is the fully forward position.

12. The head restraint assembly of claim 2 or claim 10, wherein the second, deployed position is the fully up position.

13. The head restraint assembly of claim2 or claim 10, wherein the second, deployed position is in the fully forward position and the fully up position.

14. The head restraint assembly of claim 1 or claim 8, wherein the actuator is a solenoid.

15. The head restraint assembly of claim 8, wherein the lock slide is rotatable about a cross-car axis.

16. The head restraint assembly of claim 8, further comprising:
a first lever rigidly coupled to the front shell, the first lever comprising a wall having a plurality of recesses, each of the plurality of recesses positioned to be in contact with the first lock bar during movement between the first position and the second, deployed position, each of the recesses having an angled wall portion allowing the lever to move forward toward the second, deployed position and preventing rearward movement of the lever relative to the first lock bar; and
a second lever rigidly coupled to the front shell, the second lever comprising a wall having a plurality of recesses, each of the plurality of recesses positioned to be in contact with the second lock bar during movement between the first position and the second, deployed position, each of the recesses having an angled wall portion allowing the lever to move forward toward the second, deployed position and preventing rearward movement of the lever relative to the second lock bar.
